# EUROPEAN PATENT SPECIFICATION

(11) **EP 1 955 628 B1**
(45) Date of publication and mention of the grant of the patent: **07.04.2010**
(21) Application number: 08101397.1
(22) Date of filing: 08.02.2008
(51) Int. Cl.: A47J 43/25, B26D 3/28

(54) **Food Slicer and Grater**
Schneidegerät und Reibeisen für Lebensmittel
Trancheuse et râpe pour aliments

(30) Priority: 08.02.2007 US 900557 P
(43) Date of publication of application: 13.08.2008
(73) Proprietor: DKB Household USA Corp., Irvine CA 92618 (US)
(72) Inventor: Smith-Kielland, Ingvald Alain, Los Angeles, CA 90045 (US); Hussey, Lance Gordon, Simi Valley, CA 93065 (US); Choudhuri, Sanjay, Mission Viejo, CA 92694 (US); Gerber, Patrice, Laguna Beach, CA 92651 (US); Dimas Rico, Jason Alan, Mission Viejo, VA 92692 (US); Sawhney, Ravi, Calabasas, CA 91302 (US)
(74) Representative: Jennings, Nigel Robin

(56) References cited:
- EP-A- 1 264 669
- GB-A- 2 162 741
- US-A- 710 085
- US-A- 4 212 431
- US-A1- 2005 028 685

## Description

### BACKGROUND

Food slicers and graters are widely utilized as rapid and effective means for slicing cheese, vegetables and other food products. European patent application publication EP 1 264 669 discloses an exemplary apparatus for cutting fruits, vegetables, etc. Some food slicers/graters may include a base portion including a food cutting element as well as a food holder for dragging food products across the food cutting element. These types of slicers and graters are commonly referred to as mandolin slicers. The food cutting element may, for example, be a cutting blade or a grater. The blade may be useful for slicing food products into portions of various thicknesses. The grater may be useful for shredding food products into small pieces. In some instances, the food cutting element may be removable so that a different food cutting element may be utilized. For example, a thin cut blade may be replaced with a thick cut blade.

However, as the number of food cutting elements increases, storage may become a problem. This may lead to clutter in a kitchen drawer. Moreover, having numerous blades sitting in a cluttered drawer may be dangerous as this may increase the risk of cutting oneself.

### BRIEF DESCRIPTION

To address the problems identified above, a food slicer and grater is provided. The food slicer and grater may include an adjustable base including a first and second base portion. The first base portion may be slidably moveable relative to the second base portion in a stepwise incremental fashion. The second base portion may include notches, which may be shaped to allow the food slicer and grater to engage an ordinary bowl, as well as rubber feet.

The food slicer and grater may also include a food cutter element configured to be removably coupled between the first base portion and the second base portion. When coupled, coupling locations on the first and second base portions and the food slicer may prevent the first and second base portions from sliding apart. The food cutter element may also be configured to be removably coupled to an outer surface of the adjustable base or the outer surface of another food cutter element. The food cutter element may include, for example, a thin cut blade, a thick cut blade, a fine grater, a coarse grater, or a serrated blade.

The food slicer and grater may also include a food holder configured to be removably coupled to the outer surface of the adjustable base or the outer surface of the food cutting element. When the food holder is coupled to the food cutting element, the food holder may cover at least a portion of the food cutting element.

### DESCRIPTION OF THE DRAWINGS

Fig. 1 is a view of several components that comprise a food slicer and grater.
Fig. 2 is a top view of first and second base portions of the food slicer and grater.
Fig. 3 is a side view of the second base portion.
Fig. 4 is a perspective end view of the distal end of the first base portion.
Fig. 5 is a side view of the rails of the second base portion.
Fig. 6 is a side view of the assembled slicer and grater.
Fig. 7A is a top view of the slicer and grater without a food cutting element.
Fig. 7B is a top view of the slicer and grater in a first open position.
Fig. 7C is a top view of the slicer and grater in a second open position.
Fig. 8 is a top view of the slicer and grater with a food cutting element.
Fig. 9 is an end view of a food cutting element.
Fig. 10 is a top view of a food cutting element with a serrated edge.
Fig. 11 is a top view of a food cutting element configured as a grater.
Fig. 12 is a bottom view of another food cutting element.
Fig. 13 is an end view of a food holder.
Fig. 14 is a bottom view of the food holder.
Fig. 15 is a top view of the slicer and grater with attached food cutting elements and an attached food holder.

### DETAILED DESCRIPTION

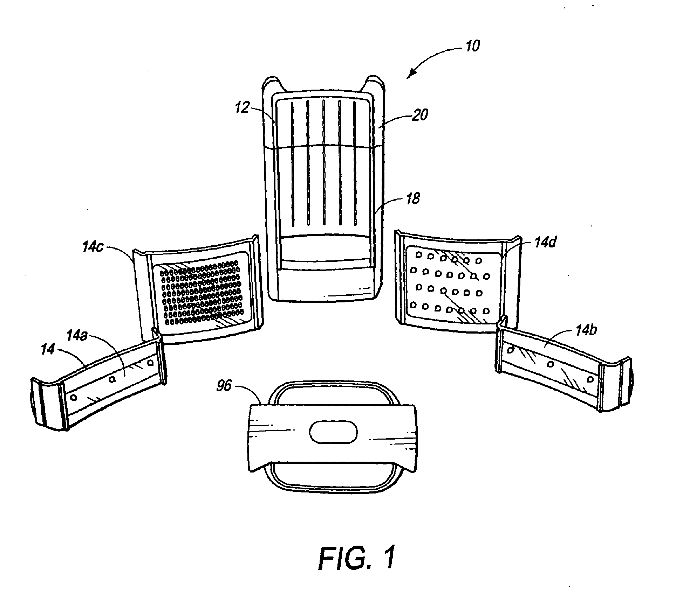

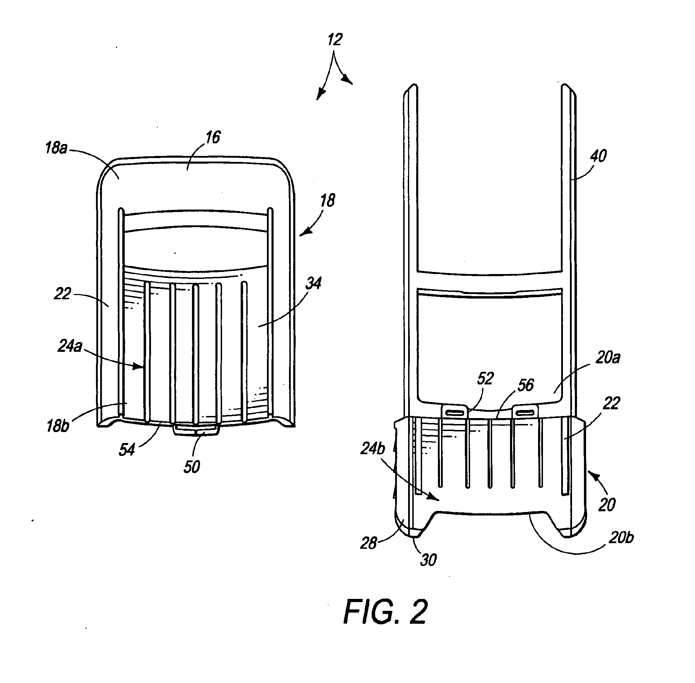

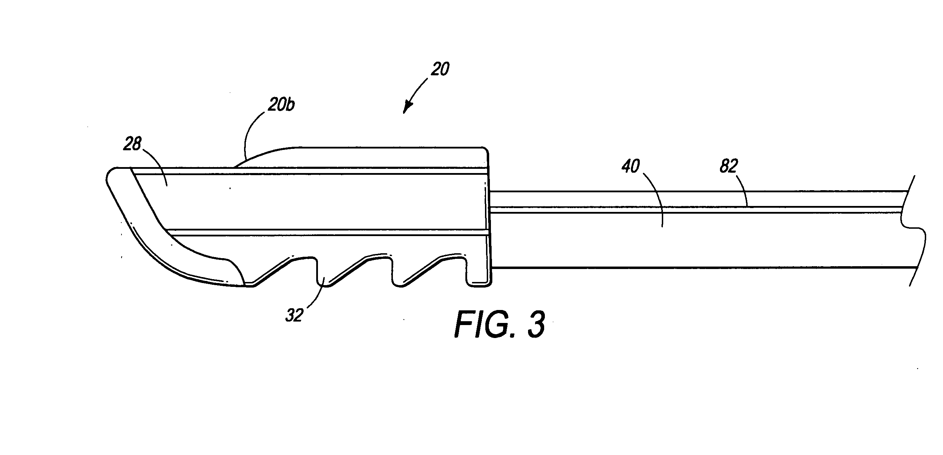

As shown in FIG. 1, one embodiment of a food slicer and grater 10 includes an adjustable base 12, a food cutter element 14, and a food holder 96. The food cutter element 14 may be selected from a thin cut blade 14a, a thick cut blade 14b, a fine grater 14c, a coarse grater 14d, a serrated blade (not shown), or any appropriate cutting tool (including slicer, graters, and the like). As shown in FIG. 2, the adjustable base 12 includes a first base portion 18 having a proximal end 18a and distal end 18b, and a second base portion 20 having a proximal region 20a and distal end 20b. The first base portion 18 includes a top plate 34 that includes an upper surface 24a. A cutting surface 22 is formed by generally continuous upper surfaces 24a, 24b of the first and second base portions 18, 20. The distal end 20b of the second base portion 20 may have two legs 28 extending distilly therefrom, as shown in FIGS. 2 and 3. The legs 28 preferably include a rubber or other frictional surface 30 configured to grip and stabilize the food slicer and grater 10 while in operation. A series of notches 32, as shown in FIG. 3, is disposed on the lower side of the second base portion 20. The notches 32 preferably are shaped to allow the food slicer and grater 10 to engage an ordinary bowl (not shown) used to collect the sliced or grated food. It should be appreciated that the notches 32 may be of varying sizes and shapes, such as, but not limited to a semi-circular, "U," "V," or square shape, or a combination thereof, and that shape preferably complements a bowl to be used. A pair of rails 40, which extends from the proximal region 20a, is discussed in more detail below.

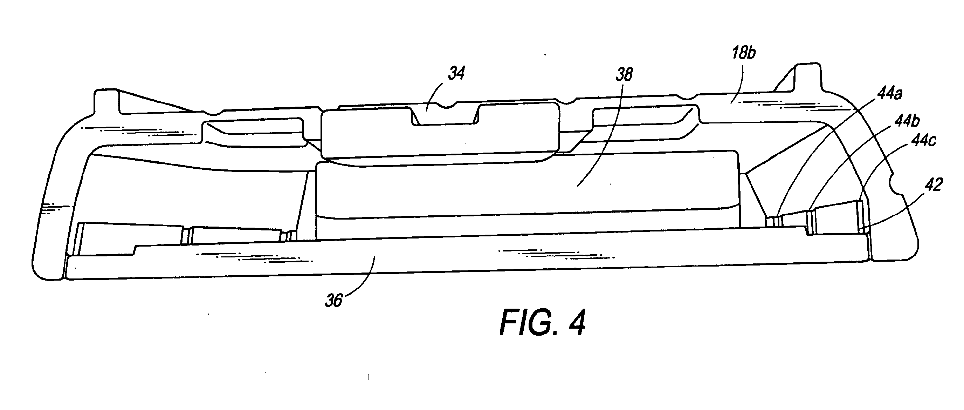

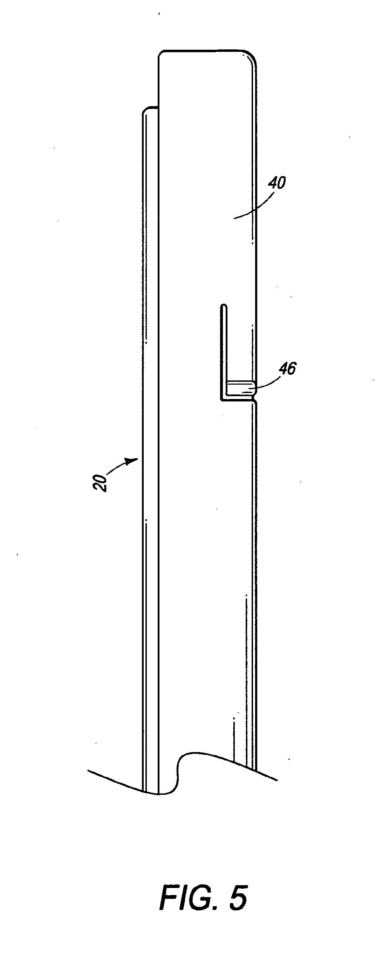

As shown in FIG. 4, which is a partial perspective distal end view of the first base portion 18, the distal end 18b of the first base portion 18 includes a top plate 34 and a bottom plate 36, forming a cavity 38 therebetween. As illustrated in FIGS. 2-3, a set of rails 40 extending from the proximal end 20a of second base portion 20 and allows the second base portion 20 to couple with the first base portion 18. As shown in FIG. 4, internal faces defining sides of the cavity 38 of the first base portion 18 includes a set of internal tracks 42 configured to receive set of rails 40. The internal tracks 42 include at least one detent disposed along the track 42 and the illustrated embodiment includes three internal female track detents 44a, 44b, 44c. As illustrated in FIG. 5, a corresponding male detent 46 is disposed on the set of rails 40 of the second base portion 20 and is configured to slidably engage the detent(s) 44 of the internal track 42. It should be appreciated that the second base portion 20 may have more than one set of rails 40, for example to increase stability and durability of the adjustable base 12, where the number and location of the detents 44 on the internal tracks 42 preferably will correspond to detents 46 disposed on the rails 40. The engagement of the rail detent(s) 46 with the internal track detents(s) 44 allows the mated first and second base portions 18, 20 to move telescopingly relative to each other in a stepwise incremental fashion.

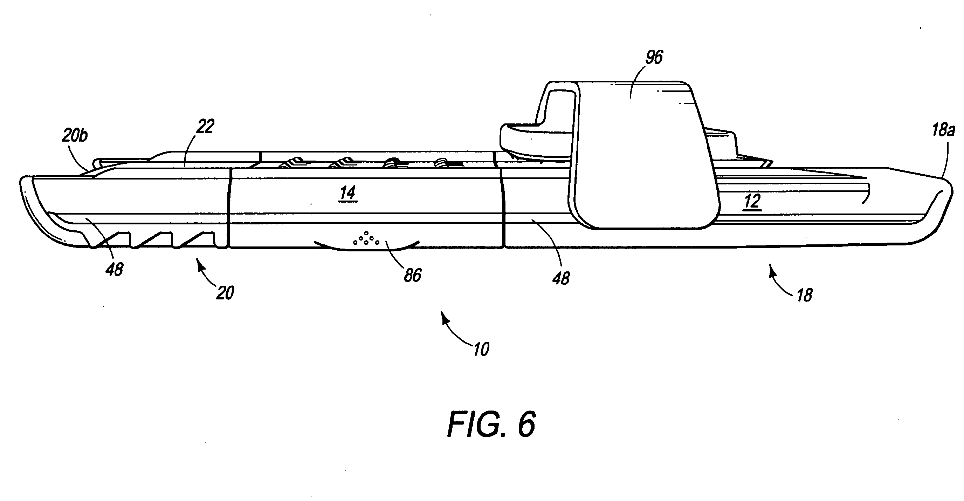

As shown in FIG. 6, an external concave track 48 extends substantially along the sides of the adjustable base 12 from the proximal end 18a of the first base portion 18 to the distal end 20b of the second base portion 20. The length of the external track 48 may be substantially equal to, less than, or greater than the length of the cutting surface 22 of the adjustable base 12.

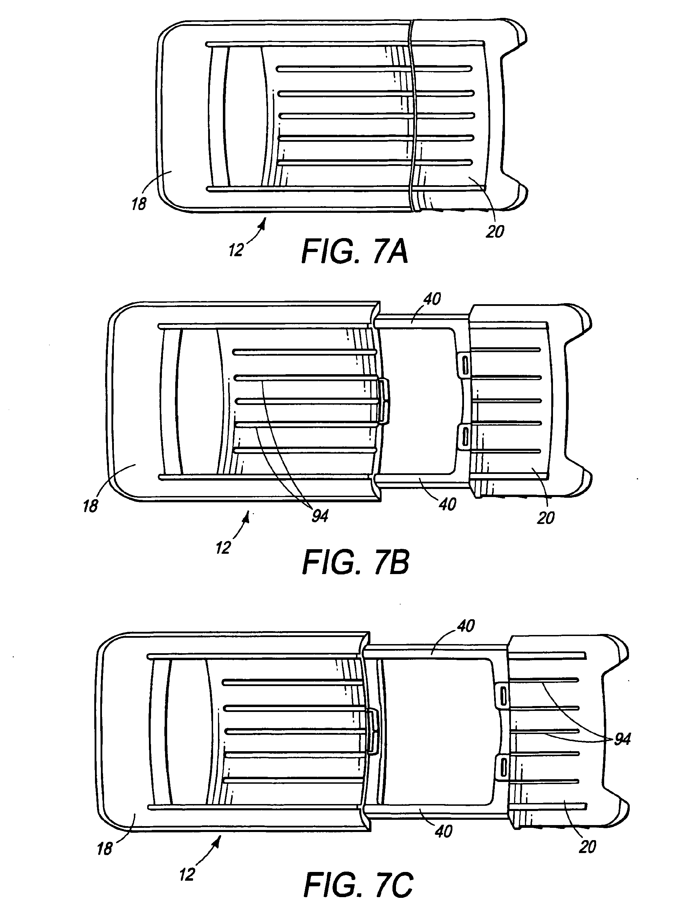

As illustrated by the embodiments shown in FIGS. 7A, B, and C, the adjustable base 12 has a closed position, a partially extended position, and a fully extended position, respectively. It should be appreciated that the adjustable base 12 may have more than three positions. Each position may reflect the engagement of a selected internal track detent 44 with the rail detent 46. For example, engagement of the male detent 46 with the internal track detent 44a, which is nearest to the distal end 18b of the first base portion 18, corresponds with the fully closed position shown in FIG. 7A. The engagement of the male detent 46 with the internal track detent 44c, which is farthest from the proximal end 18a of the first base portion 18, corresponds with the extended position shown in FIG 7C. Any internal track detents located therebetween, such as internal track detent 44b, correspond with the partially extended positions, such as is shown in FIG. 7B. In the closed position depicted in FIG. 7A, the distal end 18b of the upper surface 24a of the first base portion 18 is immediately adjacent to the proximal end 20a, and forms a surface generally continuous with the upper surface 24b of the second base portion 20.

As shown in FIG. 2, the first base portion 18 has a detent 50 coupled with the distal end 18b. Similarly, the second base portion 20 has a series of detents 52 located near the proximal end 20a configured to receive detents 50. The described series of detents 50, 52 may be configured to couple the first base portion 18 to the second base portion 20. In one embodiment, as shown in FIG. 2, the distal end 18b of the upper surface 24a of the first base portion 18 has a convex edge 54 while the proximal end 20a of the upper surface 24b of the second base portion 20 has a complementary shaped concave edge 56 to fit therewith. The edges of the distal end 18b of the first base portion 18 and the proximal end 20a of the second base portion 20 may be of any other shape, but most preferably shaped such that each edge is complementary to the other.

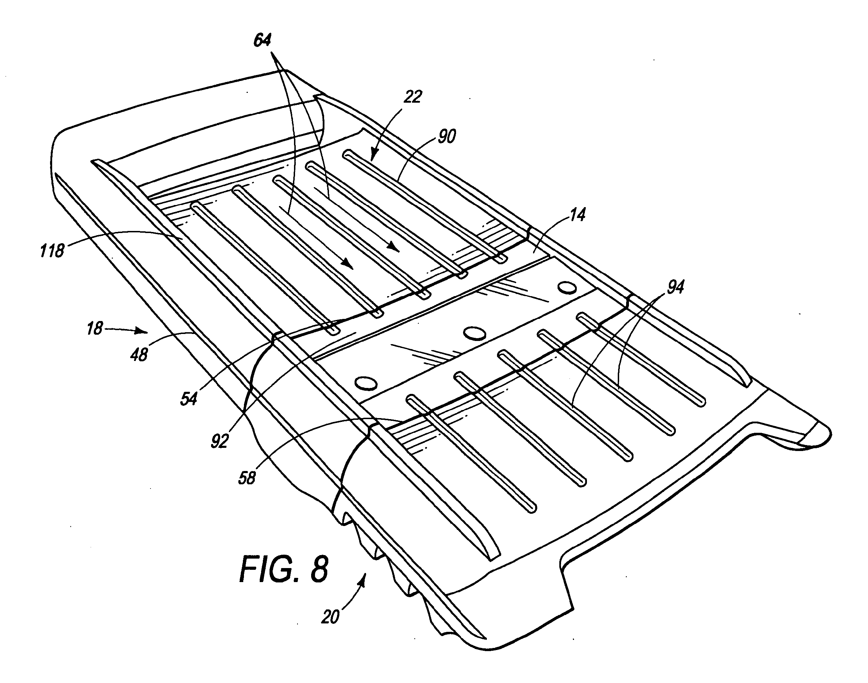

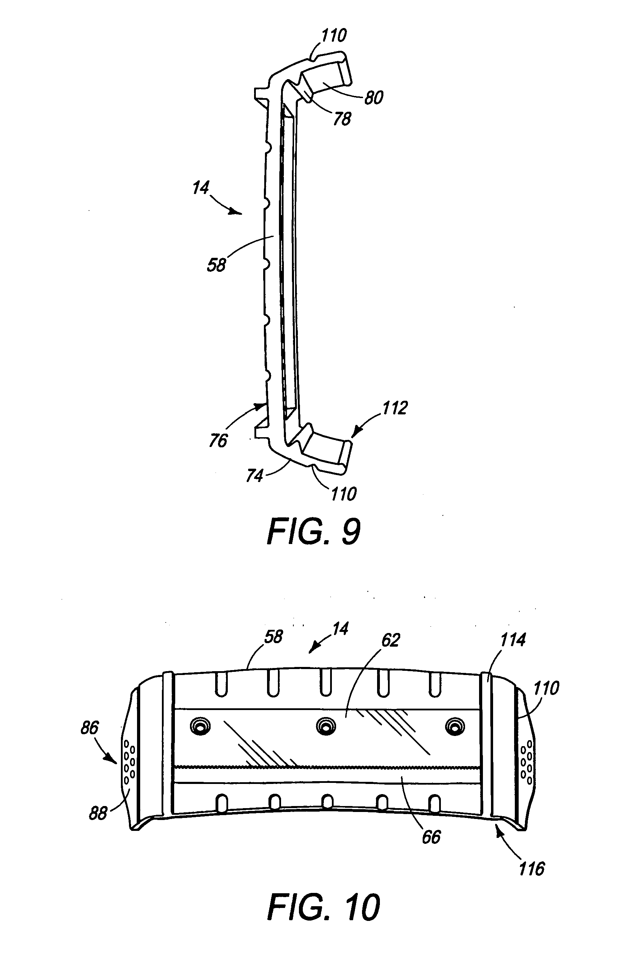

As shown in FIG. 8, a food cutter element 14 may be coupled between the first base portion 18 and second base portion 20 of the adjustable base 12. In the embodiment of FIG. 9, the food cutter element 14 includes a housing portion 58 securing a blade 62 in a manner leaving an opening 60 to allow cut food product to fall between the blade 62 and housing portion 58. In the illustrated embodiment, the blade 62 extends across the housing portion 58, is generally rectangularly shaped, and has at least one of the cutting edges exposed for slicing the food product. The orientation of the blade cutting direction 64 is formed longitudinally along the adjustable base 12 from the first base portion 18 towards the second base portion 20.

As shown in FIG. 8, the cutting surface 22 of the adjustable base 12 may have a series of guiding grooves 90 disposed thereon. The guiding grooves 90 may enable directing the food in the cutting direction 64 without substantial movement in other directions. The food cutter element 14 may also have a series of guiding plates 92 disposed thereon that may be substantially collinear with the guiding grooves 90 of the adjustable base 12. The guiding grooves 90, 92 may be smooth or patterned.

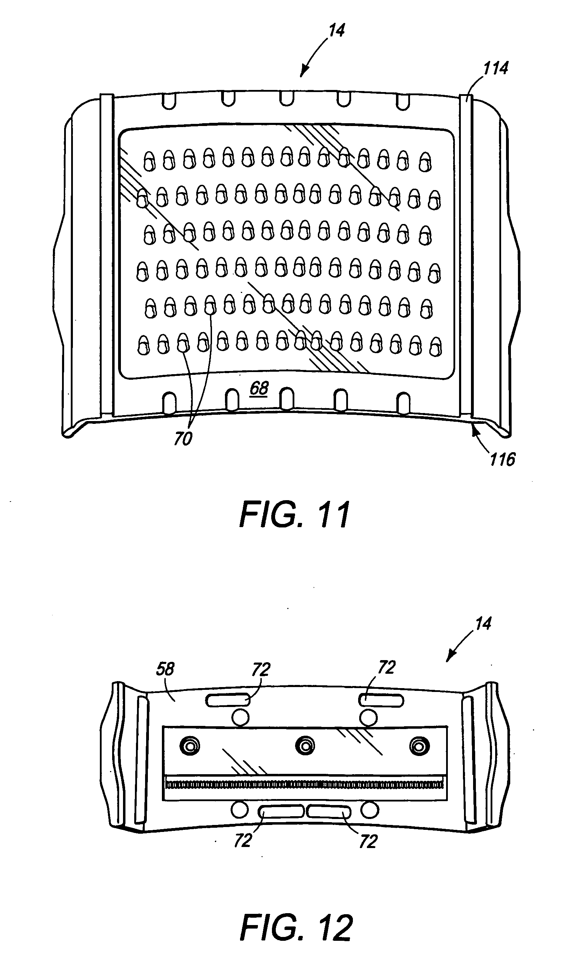

The blade 62 may include a plurality of serrations 66 as shown in FIG. 10 Each serration 66 may include an arch-shaped cutting edge (not shown), each edge having a beveled portion (not shown) along the arch (not shown). The cutting edge may include a plurality of discrete serrations 66 where each serration 66 forms its own cutting blade 66. In some embodiments, the blade 62 may include a second cutting edge (not shown). Alternative configurations for the first and second cutting edges are possible including a crenate-type, scalloped, waffle-like, v-shaped cutting edge, or the like, as will be understood by one skilled in the art. In some embodiments, the first cutting edge or the second cutting edge may be a straight edge. Alternatively, the blade may be configured as a grater 68 with a series of oblong cutting apertures 70, as illustrated in FIG. 11. Preferably, the cutting edges are formed from metal, such as stainless steel, however, any suitable material for forming a cutting edge may be used.

As discussed above, the food cutter element 14 may be disposed between the first and second base portions 18, 20. A series of coupling locations 72, as illustrated in FIG. 12, are located on the bottom of the housing portion 58 of the food cutter element 14 that engage the detents 50 on the distal end 18b of the first base portion 18 and the detents 52 on the proximal end 20a of the second base portion 20, as shown in FIG. 2. The series of detents 50, 52 on the first and second base portions 18, 20 of the adjustable base 12 used to couple with the first base portion 18 to the second base portion 20, when in the closed position, may also be used to engage the coupling locations 72 along the bottom of the food cutter element 14. It may be appreciated that the food cutter element 14 may be coupled with the adjustable base 12 using different coupling methods, such as a snap-lock or a slidable lock (not shown).

As shown in FIG. 9, a pair of flanges 74 extends from the top 76 of the housing portion 58 and includes a first set of generally concave guides 78 disposed on an inner portion 80 of the flanges 74. The first set of convex guides 78 is configured to couple with a set of concave rail tracks 82 disposed along the rails 40 of the second base portion 20. The first set of concave guides 78 has a complementary shape to the concave rail tracks 82 disposed along the rails 40, so as to secure the flange portions 74 and the food cutter element 14 to the adjustable base 12. It should be appreciated that any other appropriate type of locking or coupling mechanism known in the art may also be used to couple the first and second base portions 18, 20 to the food cutter element 14.

Disposed on an outside portion of the flanges 74 of the housing 58 is an outwardly projecting gripping portion 86 to facilitate the installation and/or removal of the food cutter element 14 from the adjustable base 12. The gripping portion 86 may include of a series of raised knobs 88 as shown in FIG. 10. Alternatively, the gripping portion 86 may include a rubber surface (not shown), or may have a series of depressions (not shown) along the outside portion of the flanges 74 to allow the user to grip the food cutter element 14.

It should be appreciated that the shape of the food cutter element 14 that is coupled between the first and second base portions 18, 20 may also have a complimentary shape to the edges 54, 56 of the first and second base portions 18, 20. This may prevent a user from installing the food cutter element 14 in an incorrect orientation.

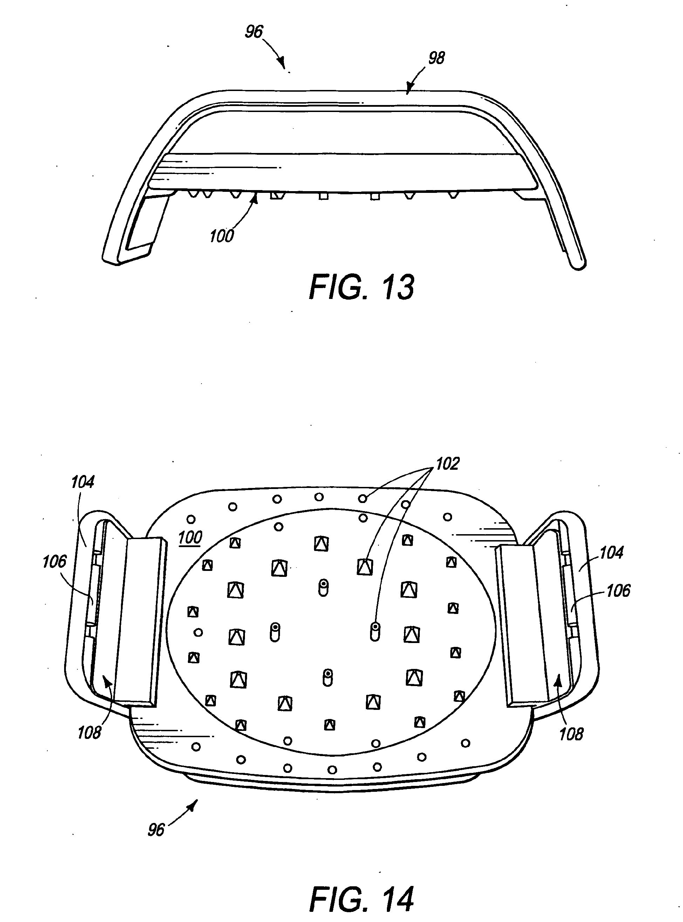

The food slicer and grater 10 may also include a food holder 96, as shown in FIGS. 13-14. The food holder 96 may be used to grip the food and move it in the cutting direction 64 to contact the food cutter element 14. The food holder 96 includes a top face 98 and a bottom face 100, as illustrated in FIG. 13. As shown in FIG. 14, disposed on the bottom face 100 is a series of protrusions 102 that is designed to engage and secure food with the food holder 96. The protrusions 102 may be constructed of material similar to the adjustable base 12, and/or be constructed out of any suitable material used in the art. In either instance, it should be appreciated that a combination of sizes, shapes, lengths, and materials of the series of protrusions 102 may be coupled to the food holder 96. The food holder 96 further includes two downwardly extending flanges 104, each having a generally convex guide 106 disposed along an interior side 108 of the flanges 104. The guides 106 are designed to slidably engage the generally concave tracks 48 of the adjustable base 12, and may be useful in guiding the food holder 96 during operation of the device 10.

Similarly and as shown in FIG. 9, the flanges 74 of the food cutter element 14 may also contain a set of generally concave tracks 110 on the exterior side of the flanges 74 similar to the tracks 48 of the adjustable base 12, to allow the food holder 96 to travel across the food cutter element 14 or couple with the food cutter element 14 in the stored position. It should be appreciated that the tracks 110 may have a "U" shape, "T" shape, square shape, or any combination thereof, where the guide 106 will be adapted to slidably engage the track 110.

The interior portion of the flange 74 of the food cutter element 14 may further include a second set of guides 112. The second set of guides 112 may be the same shape and configuration as the guides 106 disposed on the food holder 96, and are also designed to slidably engage or couple with the tracks 48 of the adjustable base 12.

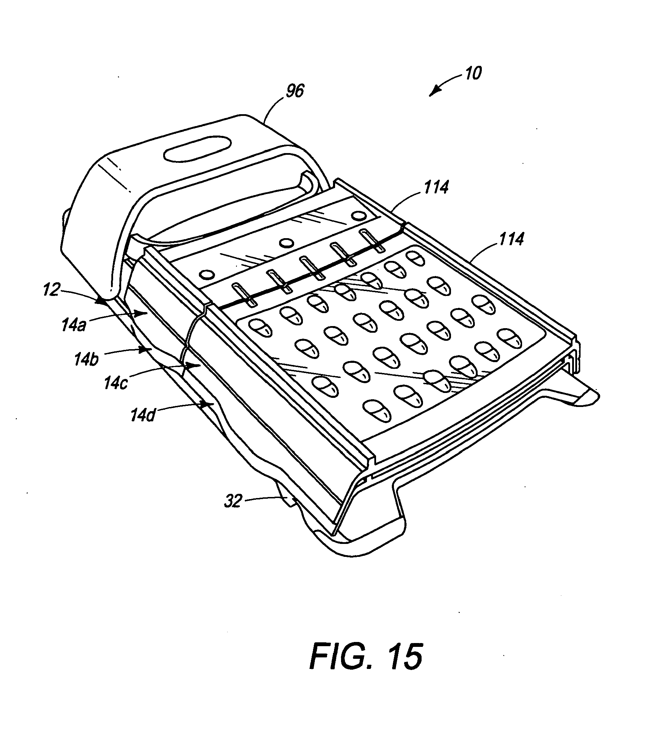

The tracks 110 of the food cutter element 14 in the illustrated embodiment of FIGS. 9-11 are designed to engage the second set of guides 112 of another food cutter element 14, as to allow the food cutter elements 14 to stack on top of one another, as shown in FIG. 15. The food cutter element 14 may further include a set of raised members 114, as shown in FIGS. 10, 11, disposed along the edges 116 of the top portion of the housing 58 of the food cutter element 14. When two or more food cutter elements 14 are coupled together in a stacked position, the bottom of the housing 58 of the top food cutter element 14 rests on the raised member 114 of the bottom food cutter element 14, thereby preventing the blades 62 of the food cutter elements 14 from contact with each other. The raised members 114 of the food cutter element 14 prevent food from sliding off the adjustable base 12 during operation. The adjustable base 12 also has a set of raised members 118 that perform substantially the same function. It should be appreciated that multiple food cutter elements 14 with varying sizes may be stacked on top of each other in a single or side-by-side arrangement either independent from the adjustable base 12, or on top of the adjustable base 12 when in a stored position, as shown in FIG. 15. Accordingly, the food holder 96 may also be coupled with the any of the food cutter elements 14 when in the stored position. Moreover, it is not necessary that the adjustable base 12 be in the closed position in order to stack multiple food cutter elements 14 upon it. For example, one food cutter element 14 may be coupled with the adjustable base 12 in the partially or fully extended position, while other food cutter elements 14 or food holders 96 are coupled with the adjustable base 12 for storage.

In operation, to assemble the food slicer and grater 10, the adjustable base 12 is actuated from the closed position shown in FIG. 7A, to the partially extended or fully extended position, shown respectively in FIGS. 7B and 7C. The position of the adjustable base 12 will generally be dependent on the size of a desired food cutter element 14. For example, if the food cutter element 14 is bigger than a previous food cutter element 14 that was coupled with the adjustable base 12, the adjustable base 12 may be extended to allow for the different size of the food cutter element and vice versa. The first set of concave guides 78 of the food cutter element 14 may then be coupled with the concave tracks 82 of the rails 40 of the second base portion 20. The detents 50, 52 disposed along the distal end 18b of the first base portion 18 and the proximal end 20a of the second base portion 20 are coupled with the coupling members 72 of the food cutter element 14. Once the food cutter element 14 is secured in place, the user may slide the food along the adjustable base 12 in the cutting direction 64, as illustrated by motions arrows in FIG. 8. The guiding grooves 90 disposed along the cutting surface 22 of the adjustable base 12 and the food cutter element 14 help guide the food along the cutting direction 64. As the food traverses over the food cutter element 14, the blade 62 may be used to cut the food that is adjacent to the blade 62. The cut food falls through the opening 60 of the food cutter element 14. The food may collect in a mixing bowl (not shown), or alternatively a chopping block (not shown). The user then repeats the cutting process. The orientation of the food slicer and grater 10 may vary. For example, the user may rest the food slicer and grater 10 over the bowl or simply lay it on the chopping block. Alternatively, the user may hold the food slicer and grater 10 at an angle with respect to the ground.

Depending on the type of food, the food holder 96 may be coupled with the food during the cutting process. During the cutting process, the guides 106 of the food holder 96 engage the tracks 48, 110 of the adjustable base 12 and food cutter element 14. It should be appreciated, that the food holder 96 may also be used without engaging the tracks 48 of the adjustable base 12.

To switch between different food cutter elements 14, the first food cutter element 14 is removed from the adjustable base 12 by either applying pressure to the bottom of the food cutter element 14 or by grasping the food cutter element 14 along the outwardly projecting gripping portions 86. Depending on the height of the other food cutter element 14, the distance between distal end 18b of the first base portion 18 and the proximal end 20a of the second base portion 20 may be changed by sliding the set of rails 40 of the second base portion 20 along the internal tracks 42 disposed within the cavity 38 of the first base portion 18 toward or away from each other. Once the desired height is achieved, the other food cutter element 14 is inserted between the first base portion 18 and the second base portion 20. The cutting process described above is then repeated.

To store the food slicer and grater 10, the food cutter element 14 may be removed from the adjustable base 12. The adjustable base 12 may then be actuated to the closed position. The food cutter element 14 or cutters may then be coupled with the adjustable base 12 by engaging the second set of guides 112 of the food cutter elements 14 with the tracks 48 of the adjustable base 12. If desired, the food cutter elements 14 may be stacked on top of each other by having the second set of guides 112 of one food cutter element 14 engage the exterior tracks 110 of another. Additionally, the food holder 96 may also be coupled with the adjustable base 12 by coupling the guides 106 of the food holder with the tracks 48 of the adjustable base 12. It should be appreciated that the food holder 96 may also be stacked on top of the food cutter element 14 by coupling the guides 106 of the food holder 96 with the tracks 110 of the food cutter element 14. Alternatively, the food cutter element 14 may also be stacked upon the food holder 96 by coupling the first or second set of guides 112 of the food cutter element 14 with a set of rail tracks (not shown) of the food holder 96. The stacking process may be repeated until the different food cutter elements 14 and food holders 96 are secured in a desired manner to the adjustable base 12. As one of skill in the art will appreciate from viewing, for example, FIG. 15, storing the food holder 96 on top of (not shown) the food cutter elements 14 may provide a safety advantage by covering the cutting surfaces of the food cutter elements.

## Claims

1. A food slicer and grater (10) comprising:
an adjustable base (12) including a first base portion (18) and a second base portion (20), where the first base portion (18) is slidably moveable relative to the second base portion (20) in a stepwise incremental fashion; the food slicer and grater (10) being **characterized by** :
a food cutter element (14) configured to be removably coupled between the first base portion (18) and the second base portion (20).

2. The food slicer and grater (10) according to claim 1, wherein the food cutter element (14) is further configured to be removably attached to an outer surface of the adjustable base (12).

3. The food slicer and grater (10) according to claim 1, wherein the food cutter element (14) is configured to be removably coupled to an outer surface of a second food cutter element.

4. The food slicer and grater (10) according to claim 1, wherein the food cutter element (14) corresponds to at least one of: a thin cut blade (14a), a thick cut blade (14b), a fine grater (14c), a coarse grater (14d), and a serrated blade.

5. The food slicer and grater (10) according to claim 1, wherein at least one portion of the adjustable base (12) further comprises notches (32) shaped to allow the food slicer and grater (10) to engage an ordinary bowl.

6. The food slicer and grater (10) according to claim 1, wherein at least one portion of the adjustable base (12) further comprises leg members (28) comprising a frictional surface.

7. The food slicer and grater (10) according to claim 1, further comprising a food holder (96) configured to be removably coupled to at least one of an outer surface of the adjustable base (12) and an outer surface of the food cutter element (14).

8. The food slicer and grater (10) according to claim 7, wherein the food holder (96) is further configured to be removably coupled to an outside surface of the food cutter element (14).

9. The food slicer and grater (10) according to claim 8, wherein the food holder (96) covers at least a cutting portion of the food cutter element (14).

10. The food slicer and grater (10) according to claim 1, further comprising a connectable interface on each of the first and second base portions (18; 20), where the first base portion (18) and second base portion (20) are prevented from sliding apart when the food cutter element (14) is coupled between the first base portion (18) and the second base portion (20).

11. A method for operating a food slicer and grater (10) comprising the steps of:
slidably adjusting a first base portion (18) and a second base portion (20) of the food slicer and grater (10) to create an opening between them; the method being **characterized by**
inserting a food cutter element (14) into the opening; and
coupling a food holder (96) to at least one of: the first base portion (18), the second base portion (20), and the food cutter (14).

12. The method according to claim 11, wherein a size of the opening is associated with a detent-controlled position of the first and second base portions (18; 20).

13. The method according to claim 11, wherein the step of inserting comprises attaching the food cutter element (14) to a surface in the opening.

14. The method according to claim 11, wherein a connectable interface provided on each of the first and second base portions (18; 20) is configured to releasably prevent the first base portion (18) and second base portion (20) from being pulled apart.

15. The method according to claim 11, further comprising coupling a second food cutter element to at least one of: the first base portion (18), the second base portion (20), and the food cutter (14).

16. The method of claim 11, wherein the method for operation comprises a storage operation further comprising the steps of:
positioning the first and second base portions (18; 20) into immediate contact;
connecting the food cutter element (14) to at least one of the first base portion (18), the second base portion (20), and a combination thereof; and
connecting at least one of a second food cutter and a food holder (96) to the food cutter (14).

## Patentansprüche

1. Lebensmittel-Schneid- und -Reibvorrichtung (10) enthaltend eine einstellbare Basis (12) mit einem ersten Basisteil (18) und einem zweiten Basisteil (20), wobei der erste Basisteil (18) auf schrittweise inkrementelle Weise gleitbeweglich gegenüber dem zweiten Basisteil (20) ist, welche Lebensmittel-Schneid- und -Reibvorrichtung (10) **gekennzeichnet ist durch** ein Lebensmittelschneidelement (14), das so ausgebildet ist, dass es zwischen dem ersten Basisteil (18) und dem zweiten Basisteil (20) abnehmbar befestigt ist.

2. Lebensmittel-Schneid- und -Reibvorrichtung (10) nach Anspruch 1, wobei das Lebensmittelschneidelement (14) weiters so ausgebildet ist, dass es an einer Außenfläche der einstellbaren Basis (12) abnehmbar angebracht ist.

3. Lebensmittel-Schneid- und -Reibvorrichtung (10) nach Anspruch 1, wobei das Lebensmittelschneidelement (14) so ausgebildet ist, dass es an einer Außenfläche eines zweiten Lebensmittelschneidelements abnehmbar befestigt ist.

4. Lebensmittel-Schneid- und -Reibvorrichtung (10) nach Anspruch 1, wobei das Lebensmittelschneidelement (14) wenigstens einem der folgenden Elemente entspricht: einer dünnen Schneide (14a), einer dicken Schneide (14b), einer feinen Reibe (14c), einer groben Reibe (14d) und/oder einer gezackten Schneide.

5. Lebensmittel-Schneid- und -Reibvorrichtung (10) nach Anspruch 1, wobei zumindest ein Teil der einstellbaren Basis (12) weiters Kerben (32) aufweist, die so gestaltet sind, dass die Lebensmittel-Schneid- und -Reibvorrichtung (10) mit einer gewöhnlichen Schüssel in Eingriff gelangen kann.

6. Lebensmittel-Schneid- und -Reibvorrichtung (10) nach Anspruch 1, wobei zumindest ein Teil der einstellbaren Basis (12) weiters Beinelemente (28) mit einer Reibungsfläche aufweist.

7. Lebensmittel-Schneid- und -Reibvorrichtung (10) nach Anspruch 1, weiters mit einem Lebensmittelhalter (96), der so ausgebildet ist, dass er an einer Außenfläche der einstellbaren Basis (12) und/oder an einer Außenfläche des Lebensmittelschneidelements (14) abnehmbar befestigt ist.

8. Lebensmittel-Schneid- und Reibvorrichtung (10) nach Anspruch 7, wobei der Lebensmittelhalter (96) weiters so ausgebildet ist, dass er an einer Außenfläche des Lebensmittelschneidelements (14) abnehmbar befestigt ist.

9. Lebensmittel-Schneid- und -Reibvorrichtung (10) nach Anspruch 8, wobei der Lebensmittelhalter (96) zumindest einen Schneidteil des Lebensmittelschneidelements (14) überdeckt.

10. Lebensmittel-Schneid- und -Reibvorrichtung (10) nach Anspruch 1, weiters mit einer verbindbaren Zwischenfläche auf sowohl dem ersten als auch dem zweiten Basisteil (18; 20), wo verhindert wird, dass der erste Basisteil (18) und der zweite Basisteil (20) auseinander gleiten, wenn das Lebensmittelschneidelement (14) zwischen dem ersten Basisteil (18) und dem zweiten Basisteil (20) befestigt ist.

11. Verfahren zum Betreiben einer Lebensmittel-Schneid- und
- Reibvorrichtung (10), umfassend die Schritte des:
gleitbaren Verstellens eines ersten Basisteils (18) und eines zweiten Basisteils (20) der Lebensmittel-Schneid- und
- Reibvorrichtung (10) zur Ausbildung einer Öffnung dazwischen, welches Verfahren **gekennzeichnet ist durch**
Einsetzen eines Lebensmittelschneidelements (14) in die Öffnung; und
Befestigen eines Lebensmittelhalters (96) am ersten Basisteil (18) und/oder am zweiten Basisteil (20) und/oder an der Lebensmittelschneideinrichtung (14).

12. Verfahren nach Anspruch 11, wobei eine Größe der Öffnung einer arretiergesteuerten Position des ersten und des zweiten Basisteils (18; 20) zugeordnet ist.

13. Verfahren nach Anspruch 11, wobei der Schritt des Einsetzens das Anbringen des Lebensmittelschneidelements (14) an einer Fläche in der Öffnung enthält.

14. Verfahren nach Anspruch 11, wobei eine sowohl auf dem ersten als auch auf dem zweiten Basisteil (18; 20) vorgesehene verbindbare Zwischenfläche so ausgebildet ist, dass sie den ersten Basisteil (18) und den zweiten Basisteil (20) lösbar daran hindert, auseinandergezogen zu werden.

15. Verfahren nach Anspruch 11, weiters enthaltend das Befestigen eines zweiten Lebensmittelschneidelements am ersten Basisteil (18) und/oder am zweiten Basisteil (20) und/oder am Lebensmittelschneider (14).

16. Verfahren nach Anspruch 11, wobei das Verfahren zum Betreiben einen Speichervorgang enthält, weiters enthaltend die Schritte des
Anordnens des ersten und des zweiten Basisteils (18; 20) in unmittelbarem Kontakt,
Verbindens des Lebensmittelschneidelements (14) mit dem ersten Basisteil (18) und/oder dem zweiten Basisteil (20) und/oder einer Kombination davon, und
Verbindens eines zweiten Lebensmittelschneiders und/oder eines Lebensmittelhalters (96) mit dem Lebensmittelschneider (14).

## Revendications

1. Trancheuse et râpe pour aliments (10) comprenant :
une base ajustable (12) comprenant une première partie de base (18) et une seconde partie de base (20), la première partie de base (18) étant mobile de façon coulissante par rapport à la seconde partie de base (20) d'une manière incrémentale pas à pas ; la trancheuse et râpe pour aliments étant **caractérisée en ce que** :
un élément de coupe d'aliments (14) est configuré pour être couplé de manière amovible entre la première partie de base (18) et la seconde partie de base (20).

2. Trancheuse et râpe pour aliments (10) selon la revendication 1, dans laquelle l'élément de coupe d'aliments (14) est également configuré pour être fixé de manière amovible à une surface extérieure de la base ajustable (12).

3. Trancheuse et râpe pour aliments (10) selon la revendication 1, dans laquelle l'élément de coupe d'aliments (14) est configuré pour être couplé de manière amovible à une surface extérieure d'un second élément de coupe d'aliments.

4. Trancheuse et râpe pour aliments (10) selon la revendication 1, dans laquelle l'élément de coupe d'aliments (14) correspond au moins à l'un de : une lame de coupe mince (14a), une lame de coupe épaisse (14b), une râpe fine (14c), une râpe grossière (14d), et une lame dentelée.

5. Trancheuse et râpe pour aliments (10) selon la revendication 1, dans laquelle au moins une partie de la base ajustable (12) comprend également des encoches (32) formées pour permettre à la trancheuse et râpe pour aliments (10) de s'accoupler avec un bol ordinaire.

6. Trancheuse et râpe pour aliments (10) selon la revendication 1, dans laquelle au moins une partie de la base ajustable (12) comprend également des éléments de pied (28) comprenant une surface de frottement.

7. Trancheuse et râpe pour aliments (10) selon la revendication 1, comprenant également un support pour aliments (96) configuré pour être couplé de manière amovible au moins à l'une d'une surface extérieure de la base ajustable (12) et une surface extérieure de l'élément de coupe d'aliments (14).

8. Trancheuse et râpe pour aliments (10) selon la revendication 7, dans laquelle le support pour aliments (96) est également configuré pour être couplé de manière amovible à une surface extérieure de l'élément de coupe d'aliments (14).

9. Trancheuse et râpe pour aliments (10) selon la revendication 8, dans laquelle le support pour aliments (96) couvre au moins une partie de coupe de l'élément de coupe d'aliments (14).

10. Trancheuse et râpe pour aliments (10) selon la revendication 1, comprenant également une interface connectable sur chacune de la première et de la seconde partie de base (18, 20), la première partie de base (18) et la seconde partie de base (20) étant empêchées de coulisser séparément quand l'élément de coupe d'aliments (14) est couplé entre la première partie de base (18) et la seconde partie de base (20).

11. Procédé d'utilisation d'une trancheuse et râpe pour aliments (10), comprenant les étapes consistant à :
ajuster de manière coulissante une première partie de base (18) et une seconde partie de base (20) de la trancheuse et râpe pour aliments (10) pour créer une ouverture entre celles-ci ;
le procédé étant **caractérisé par** :
l'insertion d'un élément de coupe d'aliments (14) dans l'ouverture ; et
le couplage d'un support pour aliments (96) au moins à l'un de : la première partie de base (18), la seconde partie de base (20), et l'élément de coupe d'aliments (14).

12. Procédé selon la revendication 11, dans lequel la taille de l'ouverture est associée à une position contrôlée par une détente de la première et de la seconde partie de base (18, 20).

13. Procédé selon la revendication 11, dans lequel l'étape d'insertion comprend la fixation de l'élément de coupe d'aliments (14) à une surface dans l'ouverture.

14. Procédé selon la revendication 11, dans lequel une interface connectable disposée sur chacune de la première et de la seconde partie de base (18, 20) est configurée pour empêcher de façon amovible la première partie de base (18) et la seconde partie de base (20) d'être séparées.

15. Procédé selon la revendication 11, comprenant également le couplage d'un second élément de coupe d'aliments au moins à l'un de : la première partie de base (18), la seconde partie de base (20), et l'élément de coupe pour aliments (14).

16. Procédé selon la revendication 11, dans lequel le procédé d'utilisation comprend une opération de stockage comprenant également les étapes consistant à :
positionner la première et la seconde partie de base (18, 20) en contact immédiat ;
connecter l'élément de coupe d'aliments (14) au moins à l'un de la première partie de base (18), la seconde partie de base (20), et une combinaison de celles-ci ; et
connecter au moins l'un d'un second élément de coupe d'aliments et d'un support pour aliments (96) à l'élément de coupe d'aliments (14).
